# EUROPEAN PATENT APPLICATION

(11) **EP 4 722 299 A1**
(43) Date of publication of application: **08.04.2026**
(21) Application number: 24815244.9
(22) Date of filing: 17.05.2024
(51) Int. Cl.: C08L 83/04, C08K 3/08, C08K 3/22, C08K 5/5415, C08L 83/05, C08L 83/07

(54) **THERMALLY CONDUCTIVE TWO-COMPONENT ADDITION-CURABLE SILICONE COMPOSITION, CURED PRODUCT, AND SHEET**

(30) Priority: 01.06.2023 JP 2023090923
(71) Applicant: SHIN-ETSU CHEMICAL CO., LTD., Tokyo 100-0005 (JP)
(72) Inventor: TABATA Yuji, Annaka-shi, Gunma 379-0224 (JP); IWATA Mitsuhiro, Annaka-shi, Gunma 379-0224 (JP)
(74) Representative: Mewburn Ellis LLP
(86) International application number: PCT/JP2024/018285
(87) International publication number: WO 2024/247760

(57) **Abstract**

Provided is a thermally conductive two-component addition-curable silicone composition comprising a first liquid and a second liquid, wherein the first liquid does not contain (B) and the second liquid does not contain (E), and separation and sedimentation of a thermally conductive filler can be suppressed with high thermal conductivity and low viscosity.
(A) an organopolysiloxane having an alkenyl group;
(B) an organohydrogenpolysiloxane having a hydrogen atom;
(C) a thermally conductive filler containing an aluminum hydroxide powder (C-1) of 40-100 µm,
an aluminum hydroxide powder (C-2) of 5 µm or more and less than 40 µm, and
a thermally conductive filler (C-3) of 0.1 µm or more and less than 5 µm,
wherein the total proportion of (C-1) and (C-2) in the component (C) is 40-70%, and the proportion of (C-3) in the component (C) is 30-60%;

(D) a silane coupling agent; and
(E) a hydrosilylation reaction platinum catalyst.

## Description

### TECHNICAL FIELD

The present invention relates to a thermally conductive two-pack addition-curable silicone composition, a cured product, a sheet, and a method for producing the thermally conductive two-pack addition-curable silicone composition.

### BACKGROUND ART

Heat generation during operation and the resulting performance degradation of electronic components are well known, and various heat dissipation techniques have been employed to address this issue. In general, heat dissipation is achieved by placing a cooling member (e.g., a heat sink) near the heat-generating part and bringing them into close contact to efficiently dissipate heat from the cooling member. However, if there is a gap between the heat-generating member and the cooling member, air with low thermal conductivity enters the gap, reducing thermal conductivity and preventing the temperature of the heat-generating member from sufficiently decreasing. To prevent this phenomenon, thermally conductive heat dissipation materials with good conformability to the member surface, such as heat dissipation grease and heat dissipation sheets, are used.

An onboard battery charger (OBC), an example of the heat-generating member, automatically adjusts current and voltage during battery charging and generates a large amount of thermal energy during power conversion and during charging. Therefore, heat dissipation materials used for thermal management need to exhibit high heat dissipation performance to maintain low operating temperatures and keep high performance. Additionally, heat dissipation materials filled with insulating fillers are required to be used in environments requiring insulation, such as OBCs.

Examples of insulating and highly thermally conductive thermally conductive fillers used in thermal conductive materials include aluminum oxide and aluminum nitride. However, aluminum oxide and aluminum nitride have a high Mohs hardness of 8 or higher and may pose a risk of wear to dispenser components made of SUS or SiC. In particular, a two-pack addition-curable heat dissipation material is applied by dispensing a constant volume using a metering dispenser, and then mixing the two packs in a static mixer before application. However, such a material often causes abrasive wear of dispenser components used for metering and dispensing, resulting in reduced accuracy of metering and dispensing components during operation. In contrast, aluminum hydroxide has a low Mohs hardness of 3, reducing concerns about abrasive wear of dispenser components.

However, aluminum hydroxide has lower thermal conductivity than aluminum oxide or aluminum nitride, and it is thus necessary to increase the amount of thermally conductive filler to obtain a thermally conductive composition having high thermal conductivity. However, simply increasing the aluminum hydroxide content increases the viscosity of the composition and makes dispensing difficult. In contrast, reducing the viscosity of the composition to improve workability increases oil separation due to the density difference between organopolysiloxane, which is a base oil, and the thermally conductive filler, leading to a problem of filler sedimentation during storage. Thus, using aluminum hydroxide with large particle sizes can be considered as a method for increasing thermal conductivity at the same filler content; however, there are no specific examples in which a thermally conductive filler is filled at 90 mass% or more using aluminum hydroxide with large particle sizes.

Patent Document 1 discloses a thermally conductive silicone composition including aluminum hydroxide particles with an average particle size of 50 µm or less. Using thermally conductive fillers with larger average particle sizes is considered to increase the thermal conductivity of silicone compositions; however there are no examples using aluminum hydroxide having an average particle size of more than 50 µm.

### PRIOR ART DOCUMENT

### PATENT DOCUMENT

Patent Document 1: JP 5940325

### SUMMARY OF INVENTION

### TECHNICAL PROBLEM

An object of the present invention, which has been made under the above-mentioned circumstances, is to provide a thermally conductive two-pack addition-curable silicone composition with an increased proportion of a thermally conductive filler for high thermal conductivity, low viscosity for high productivity, reduced wear on coating equipment, and resistance to separation and sedimentation of the thermally conductive filler in the composition over time, and to provide a cured product, a sheet, and a method for producing the thermally conductive two-pack addition-curable silicone composition.

### SOLUTION TO PROBLEM

Making extensive investigations to attain the above object, the inventors have found that: the above-mentioned problems can be solved by providing a thermally conductive two-pack addition-curable silicone composition comprising: (A) an organopolysiloxane having at least two silicon-bonded alkenyl groups per molecule; (B) an organohydrogenpolysiloxane having at least two silicon-bonded hydrogen atoms per molecule; (C) aluminum hydroxide powders with different average particle sizes and a thermally conductive filler with an average particle size of 0.1 µm or more and less than 5 µm in specific amounts and a specific ratio; (D) at least one selected from silane coupling agents and specific organopolysiloxanes having hydrolyzable groups; and (E) a hydrosilylation reaction platinum catalyst, wherein the composition comprises a first pack and a second pack, the first pack containing (A), (C), (D), and (E) below and being free of (B) below, the second pack containing (A), (B), (C), and (D) below and being free of (E) below. The present invention is predicated on this finding.

The present invention thus provides the following inventions.
1. A thermally conductive two-pack addition-curable silicone composition comprising a first pack and a second pack, the first pack containing components (A), (C), (D), and (E) below and being free of component (B) below, the second pack containing components (A), (B), (C), and (D) below and being free of component (E) below:
   (A) an organopolysiloxane having at least two silicon-bonded alkenyl groups per molecule;
   (B) an organohydrogenpolysiloxane having at least two silicon-bonded hydrogen atoms per molecule;
   (C) a thermally conductive filler containing an aluminum hydroxide powder (C-1) with an average particle size of 40 to 100 µm,
      an aluminum hydroxide powder (C-2) with an average particle size of 5 µm or more and less than 40 µm, and
      a thermally conductive filler (C-3) with an average particle size of 0.1 µm or more and less than 5 µm, wherein a total proportion of (C-1) and (C-2) in component (C) is 40 to 70 mass%, a proportion of (C-3) in component (C) is 30 to 60 mass%, and a total proportion of component (C) in the entire thermally conductive two-pack addition-curable silicone composition obtained by combining the first pack and the second pack is 90 to 95 mass%;
   (D) at least one selected from silane coupling agents and organopolysiloxanes represented by general formula (1) below: 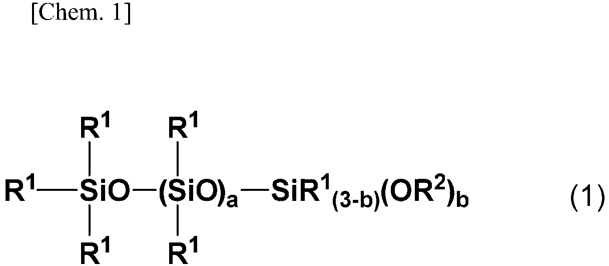 wherein R¹ is independently a monovalent hydrocarbon group, R² is independently an alkyl, alkoxyalkyl, alkenyl or acyl group, a is 5 to 100, and b is 1 to 3; and
   (E) a hydrosilylation reaction platinum catalyst.
2. The thermally conductive two-pack addition-curable silicone composition according to 1, wherein an amount of component (D) is 10 to 500 parts by mass based on a total of 100 parts by mass of components (A) and (B) in the entire thermally conductive two-pack addition-curable silicone composition obtained by combining the first pack and the second pack.
3. The thermally conductive two-pack addition-curable silicone composition according to 1 or 2, wherein component (C-3) is aluminum oxide.
4. The thermally conductive two-pack addition-curable silicone composition according to any one of 1 to 3, wherein a mass ratio of component (C-1) to component (C-2) is 2:8 to 8:2.
5. The thermally conductive two-pack addition-curable silicone composition according to any one of 1 to 4, wherein an amount of component (C-1), an amount of component (C-2), and an amount of component (C-3) are 100 to 700 parts by mass, 50 to 500 parts by mass, and 150 to 800 parts by mass, respectively, based on a total of 100 parts by mass of components (A), (B), (D), and (E) in the entire thermally conductive two-pack addition-curable silicone composition obtained by combining the first pack and the second pack.
6. The thermally conductive two-pack addition-curable silicone composition according to any one of 1 to 5 comprising a density of 3.0 g/cm³ or less in an immersion method specified in JIS K 6268 and a thermal conductivity of 3.0 W/m·K or more in a hot disk method in accordance with ISO 22007-2.
7. A cured product of the thermally conductive two-pack addition-curable silicone composition according to any one of 1 to 6.
8. A thermally conductive sheet comprising a cured product of the thermally conductive two-pack addition-curable silicone composition according to any one of 1 to 6.
9. A method for producing the thermally conductive two-pack addition-curable silicone composition according to any one of 1 to 6, comprising a step of mixing components (C-1), (C-2), and (C-3) above.

### ADVANTAGEOUS EFFECTS OF INVENTION

According to the present invention, there are obtained a thermally conductive two-pack addition-curable silicone composition with an increased proportion of a thermally conductive filler for high thermal conductivity, low viscosity for high productivity, reduced wear on coating equipment, and resistance to separation and sedimentation of the thermally conductive filler in the composition over time, and a cured product, a sheet, and a method for producing the thermally conductive two-pack addition-curable silicone composition.

### DESCRIPTION OF EMBODIMENTS

The present invention will be described below in detail. The "thermally conductive two-pack addition-curable silicone composition" of the present invention may be referred to simply as "two-pack silicone composition."

### [Component (A)]

Component (A) of the present invention is a main component (base polymer) of the composition. Component (A) is an organopolysiloxane having at least two silicon-bonded alkenyl groups per molecule and can be used alone or in admixture. Examples of component (A) include an organopolysiloxane represented by average compositional formula (2) below and having at least two alkenyl groups bonded to silicon atoms (hereinafter may be referred to as "silicon-bonded alkenyl groups") per molecule. The number of the silicon-bonded alkenyl groups per molecule is at least 2, preferably 2 to 50, more preferably 2 to 20. The silicon-bonded alkenyl groups may be attached to a silicon atom at the end of the molecular chain or a silicon atom at a non-end position of the molecular chain (i.e., other than the molecular chain end), or a combination thereof.

R³_{c}R⁴_{d}SiO_{(4-c-d)/2} (2)

wherein R³ is independently an alkenyl group, R⁴ is independently an unsubstituted or substituted monovalent hydrocarbon group free of aliphatic unsaturation, c is a number satisfying 0.0001 to 0.2, d is a number satisfying 1.7 to 2.2, and c + d is a number satisfying 1.9 to 2.4.

Examples of the alkenyl group include alkenyl groups having 2 to 6 carbon atoms, such as vinyl, allyl, isopropenyl, 1-butenyl, 1-pentenyl, and 1-hexenyl. Of these, alkenyl groups having 2 to 4 carbon atoms are preferred, and vinyl groups are more preferred.

Examples of the remaining organic group bonded to silicon atoms, which is an unsubstituted or substituted monovalent hydrocarbon group free of aliphatic unsaturation, include monovalent hydrocarbon groups having 1 to 12 carbon atoms, with monovalent hydrocarbon groups having 1 to 6 carbon atoms being preferred. Specific examples thereof include alkyl groups such as methyl, ethyl, propyl, isopropyl, butyl, isobutyl, tert-butyl, pentyl, hexyl, cyclohexyl, octyl and dodecyl; aryl groups such as phenyl, 1-naphthyl, 2-naphthyl, and tolyl; aralkyl groups such as benzyl and 2-phenylethyl; and substituted forms of the foregoing groups in which some or all of the hydrogen atoms are substituted by halogen atoms, e.g., fluorine, chlorine or bromine, such as chloromethyl and 3,3,3-trifluoropropyl. From the aspect of ease of synthesis, methyl, phenyl and 3,3,3-trifluoropropyl are preferred.

c is 0.0001 to 0.2, preferably 0.0005 to 0.1. d is 1.7 to 2.2, preferably 1.9 to 2.0. c + d is a number satisfying 1.9 to 2.4, preferably a number satisfying 1.95 to 2.05.

The kinematic viscosity of component (A) at 25°C measured with an Ostwald viscometer is preferably 10 to 100,000 mm²/s, more preferably 100 to 50,000 mm²/s. As long as the viscosity is 10 to 100,000 mm²/s, the obtained cured product has satisfactory strength, flow and workability.

Examples of the organopolysiloxane serving as component (A) meeting the above requirements include those represented by general formula (3): 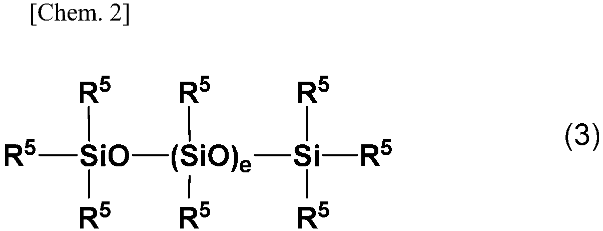 wherein R⁵ is independently an unsubstituted or substituted monovalent hydrocarbon group, e is a number of 10 to 2,000, at least two of R⁵ being selected to be alkenyl groups.

In formula (3), the unsubstituted or substituted monovalent hydrocarbon groups represented by R⁵ are as defined above for R³ (alkenyl groups) and R⁴ (unsubstituted or substituted monovalent hydrocarbon groups free of aliphatic unsaturation), and the number of carbon atoms, illustrative examples, and the like thereof are also the same. Notably, at least two of groups R⁵, preferably 2 to 50, more preferably 2 to 20, are selected to be alkenyl groups. Setting the number of alkenyl groups to be greater than or equal to the lower limit described above facilitates curing. Setting the number of alkenyl groups to be less than or equal to the upper limit described above stabilizes the cured product. e is preferably 40 to 1,200, more preferably 50 to 600. With e in this range, a two-pack silicone composition having a more suitable viscosity is obtained and easy to handle, resulting in a more robust cured product.

Specific examples of the organopolysiloxane represented by formula (3) above include molecular chain both end dimethylvinylsiloxy-capped dimethylpolysiloxane, molecular chain both end trimethylsiloxy-capped dimethylsiloxane/methylvinylsiloxane copolymers, molecular chain one end trimethylsiloxy-capped, one end dimethylvinylsiloxy-capped dimethylsiloxane/methylvinylsiloxane copolymers, molecular chain both end dimethylvinylsiloxy-capped dimethylsiloxane/methylvinylsiloxane copolymers, and molecular chain both end dimethylvinylsiloxy-capped dimethylsiloxane/diphenylsiloxane copolymers. Component (A) is produced using any prior art well-known methods.

The amount of component (A) in the entire thermally conductive two-pack addition-curable silicone composition obtained by combining the first pack and the second pack is preferably 0.5 to 8.0 mass%, more preferably 0.8 to 5.0 mass%.

### [Component (B)]

Component (B) of the present invention is an organohydrogenpolysiloxane having at least two hydrogen atoms bonded to silicon atoms (hereinafter may be referred to as "silicon-bonded hydrogen atoms") per molecule. Component (B) can be used alone or in admixture. The organohydrogenpolysiloxane has preferably 2 to 100, more preferably 2 to 50, even more preferably 2 to 20 silicon-bonded hydrogen atoms per molecule. Setting the number of silicon-bonded hydrogen atoms to be greater than or equal to the lower limit described above facilitates curing. Setting the number of silicon-bonded hydrogen atoms to be less than or equal to the upper limit described above provides greater flexibility and can further prevent voids caused by dehydrogenation during storage or curing. The silicon-bonded hydrogen atom may be located at an end of the molecular chain or an intermediate position of the molecular chain or both.

Examples of component (B) include compounds represented by the following average compositional formula (4). 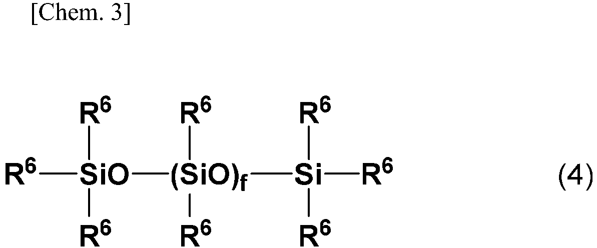 wherein R⁶ is independently a hydrogen atom or a monovalent hydrocarbon group free of aliphatic unsaturation, and f is 8 to 1,000. R⁶ and f are selected such that component (B) has at least two silicon-bonded hydrogen atoms per molecule. Note that the order of siloxane bonds is not specified in the formula of organopolysiloxane.

In formula (4) above, R⁶ is independently a hydrogen atom or a monovalent hydrocarbon group free of aliphatic unsaturation. The number of carbon atoms in the monovalent hydrocarbon group is preferably 1 to 12, more preferably 1 to 6. Specific examples of R⁶ include alkyl groups such as methyl, ethyl, propyl, isopropyl, butyl, isobutyl, tert-butyl, pentyl, hexyl, cyclohexyl, octyl and dodecyl; aryl groups such as phenyl, 1-naphthyl, 2-naphthyl, and tolyl; aralkyl groups such as benzyl and 2-phenylethyl; and substituted forms of the foregoing groups in which some or all of the hydrogen atoms are substituted by halogen atoms, e.g., fluorine, chlorine or bromine, such as chloromethyl and 3,3,3-trifluoropropyl. From the aspect of ease of synthesis, methyl, phenyl and 3,3,3-trifluoropropyl are preferred.

f is 8 to 1,000. To improve the handling properties of the composition and the properties of the cured product, f is preferably 10 to 500, more preferably 15 to 100. With the degree of polymerization in this range, a two-pack silicone composition having a more suitable viscosity is obtained and easy to handle, resulting in a more robust cured product. R⁶ and f described above are appropriately selected such that component (B) has at least two silicon-bonded hydrogen atoms per molecule. The number of silicon-bonded hydrogen atoms is at least 2, preferably 2 to 20. With this range, a two-pack silicone composition having a more suitable viscosity can be obtained. The molecular structure of the organohydrogenpolysiloxane serving as component (B) is not particularly limited as long as the above requirements are met. Component (B) is produced using any prior art well-known methods.

The organohydrogenpolysiloxane serving as component (B) preferably has a viscosity of 1 to 10,000 mPa·s, more preferably 3 to 2,000 mPa·s, even more preferably 10 to 1,000 mPa·s. The organohydrogenpolysiloxane is preferably liquid at room temperature (25°C). The viscosity of component (B) is measured using a BM-type viscometer (e.g., available from Tokyo Keiki Inc.). The rotor, the rotational speed, and the rotation time are appropriately selected based on the viscosity in accordance with a standard method.

The amount of component (B) in the entire thermally conductive two-pack addition-curable silicone composition obtained by combining the first pack and the second pack is preferably such that the number of silicon-bonded hydrogen atoms (SiH groups) in component (B) per alkenyl group in component (A) in the entire composition is 0.1 to 5.0, more preferably 0.2 to 2.0, even more preferably 0.5 to 1.5. If the amount of component (B) is too small, the storage stability-improving effect may be insufficient. If the amount component (B) is too large, the thermally conductive silicone cured product may have unstable physical properties.

Component (B) is used in the second pack and is not contained in the first pack. When component (B) is used in the first pack, the first pack thickens and cures over time at room temperature, and it is thus impossible to maintain the viscosity of the two-pack silicone composition during production.

### [Component (C)]

Component (C) of the present invention is a thermally conductive filler containing
an aluminum hydroxide powder (C-1) with an average particle size of 40 to 100 µm,
an aluminum hydroxide powder (C-2) with an average particle size of 5 µm or more and less than 40 µm, and
a thermally conductive filler (C-3) with an average particle size of 0.1 µm or more and less than 5 µm, wherein the total proportion of (C-1) and (C-2) in component (C) is 40 to 70 mass%, and the proportion of (C-3) in component (C) is 30 to 60 mass%. These components can be used alone or in admixture.

The average particle size in the present invention can be measured using a laser diffraction/scattering particle size distribution analyzer, such as "Microtrac MT3300EX" available from Nikkiso Co., Ltd. The average particle size is calculated by multiplying each measured particle size by its relative particle amount (difference%) and dividing the sum of these products by the total relative particle amount (100%). The average particle size is the average diameter of the particles.

The average particle size of component (C-1) is 40 µm to 100 µm, preferably 50 µm to 90 µm. If the average particle size of component (C-1) exceeds 100 µm, it may cause wear of a kneader or agitator blade, increase the material thickness during mounting, enlarge the surface irregularities of the sheet, and consequently increase the thermal resistivity. The aluminum hydroxide powder of component (C-1) may be used alone, or a mixture of two or more aluminum hydroxide powders having different average particle sizes may be used.

The average particle size of component (C-2) is 5 µm or more and less than 40 µm, preferably 10 µm to 30 µm. The aluminum hydroxide powder of component (C-2) may be used alone, or a mixture of two or more aluminum hydroxide powders having different average particle sizes may be used.

The average particle size of thermally conductive filler (C-3) is 0.1 µm or more and less than 5 µm, preferably 0.5 µm to 3 µm. If the average particle size is less than 0.1 µm, the surface area of the particles increases, thereby increasing the interfacial area between the particles and the resin. This results in an increase in interfacial thermal resistance, which tends to lower the thermal conductivity. In addition, there is a problem in that the viscosity of the two-pack silicone composition increases significantly. The thermally conductive filler is preferably aluminum oxide powder, magnesium oxide powder, aluminum hydroxide powder, zinc oxide powder, or aluminum nitride powder. From the aspect of filling properties, aluminum oxide is preferred. Both spherical and irregular shapes can be used; however, in the case of spherical particles, the filler particles are in point contact with each other, resulting in a reduced contact area between the filler particles. Thus, irregular shapes are more preferred. Any shape other than spherical is irregular. The thermally conductive filler of component (C-3) may be used alone, or a mixture of two or more thermally conductive fillers having different average particle sizes may be used.

The amount of component (C) in the entire thermally conductive two-pack addition-curable silicone composition obtained by combining the first pack and the second pack is 90 to 95 mass%, preferably 91 to 94 mass%. If the amount of component (C) is less than 90 mass%, the two-pack silicone composition exhibits insufficient thermal conduction. If the amount of component (C) exceeds 95 mass%, the handling properties during filling of component (C) deteriorate.

The total proportion of (C-1) and (C-2) in component (C) in the entire thermally conductive two-pack addition-curable silicone composition obtained by combining the first pack and the second pack is 40 to 70 mass%, preferably 45 to 75 mass%. The proportion of component (C-3) is 30 to 60 mass%, preferably 35 to 55 mass%.

If the total proportion of components (C-1) and (C-2) is less than 40 mass% (the proportion of component (C-3) exceeds 60 mass%), it may increase wear of a kneader or agitator blade, and the thermally conductive filler in the composition undergoes significant separation and sedimentation over time. If the total proportion of components (C-1) and (C-2) exceeds 70 mass% (the proportion of component (C-3) is less than 30 mass%), the two-pack silicone composition exhibits insufficient thermal conductivity, and the thermally conductive filler in the composition undergoes significant separation and sedimentation over time.

The mass ratio of component (C-1) to component (C-2) is preferably 2:8 to 8:2, more preferably 2.5:7.5 to 7.5:2.5. With the mass ratio in this range, the filling properties are improved, and the separation and sedimentation of the thermally conductive filler in the composition over time are reduced.

More specifically, in the entire thermally conductive two-pack addition-curable silicone composition obtained by combining the first pack and the second pack, the amount of component (C-1) is preferably 100 to 700 parts by mass, more preferably 200 to 600 parts by mass, even more preferably 300 to 500 parts by mass, based on a total of 100 parts by mass of components (A), (B), (D), and (E). Setting the amount of component (C-1) to be greater than or equal to the lower limit described above improves filling properties and further increases thermal conductivity. Setting the amount of component (C-1) to be less than or equal to the upper limit described above improves filling properties and allows the two-pack silicone composition to have a viscosity in a more suitable range.

More specifically, in the entire thermally conductive two-pack addition-curable silicone composition obtained by combining the first pack and the second pack, the amount of component (C-2) is preferably 50 to 500 parts by mass, more preferably 75 to 400 parts by mass, even more preferably 100 to 300 parts by mass, based on a total of 100 parts by mass of components (A), (B), (D), and (E). Setting the amount of component (C-2) in the above range achieves dense filling of component (C), further increases thermal conductivity, and allows the two-pack silicone composition to have a viscosity in a more suitable range.

In the entire thermally conductive two-pack addition-curable silicone composition obtained by combining the first pack and the second pack, the amount of component (C-3) is preferably 150 to 800 parts by mass, more preferably 200 to 700 parts by mass, even more preferably 300 to 600 parts by mass, based on a total of 100 parts by mass of components (A), (B), (D), and (E). Setting the amount of component (C-2) to be greater than or equal to the lower limit described above achieves dense filling of component (C) and can suppress oil separation. Setting the amount of component (C-2) to be less than or equal to the upper limit described above further increases thermal conductivity and allows the two-pack silicone composition to have a viscosity in a more suitable range.

It is noted that component (C) is used in both the first and second packs. A ratio of portions of component (C) divided in the first and second packs is not particularly limited as long as the first and second packs are mixed in a substantially equal mass ratio.

### [Component (D)]

Component (D) of the present invention is at least one selected from silane coupling agents and organopolysiloxanes represented by general formula (1) below: 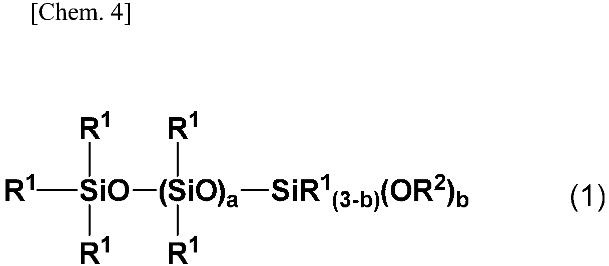 wherein R¹ is independently a monovalent hydrocarbon group, R² is independently an alkyl, alkoxyalkyl, alkenyl or acyl group, a is 5 to 100, and b is 1 to 3. Component (D) can be used alone or in admixture. The blending of component (D) provides the effect of reducing the viscosity of the resulting two-pack silicone composition.

Examples of silane coupling agents include vinyl, epoxy, acrylic, and long-chain alkyl based silane coupling agents. Specific examples include hexyltrimethoxysilane, decyltrimethoxysilane, hexadecyltrimethoxysilane, decylmethyldimethoxysilane, decyldimethylmethoxysilane, decyltriethoxysilane, 7-octenyltrimethoxysilane, and phenyltrimethoxysilane. Inter alia, decyltrimethoxysilane is preferred.

In formula (1) above, R¹ is independently a monovalent hydrocarbon group, which may be unsubstituted or substituted. The number of carbon atoms is preferably 1 to 10, more preferably 1 to 6, even more preferably 1 to 3. Specific examples include alkyl groups such as methyl, ethyl, propyl, isopropyl, butyl, isobutyl, tert-butyl, pentyl, neopentyl, hexyl, cyclohexyl, octyl, and dodecyl; aryl groups such as phenyl groups, and substituted forms of the foregoing groups, such as chloromethyl, 3,3,3-trifluoropropyl, and cyanoethyl groups, in which some or all of the hydrogen atoms are substituted by halogen atoms, e.g., fluorine, chlorine, or bromine, or by cyano groups or other groups. R¹ is preferably a methyl group, a phenyl group, or a 3,3,3-trifluoropropyl group.

In formula (1) above, R² is independently an alkyl, alkoxyalkyl, alkenyl, or acyl group. Examples of alkyl groups include straight alkyl groups, branched alkyl groups, and cyclic alkyl groups as exemplified above for R¹. The alkoxyalkyl groups are preferably of 2 to 10 carbon atoms, and examples thereof include methoxyethyl and methoxypropyl. Examples of alkenyl groups include vinyl, allyl, isopropenyl, 1-butenyl, 1-pentenyl, and 1-hexenyl groups. Alkenyl groups having 1 to 8 carbon atoms are preferred. The acyl groups are preferably of 2 to 10 carbon atoms and examples thereof include acetyl and octanoyl. R² is preferably an alkyl group, with methyl and ethyl being more preferred.

a is 5 to 100, preferably 8 to 50, and b is 1 to 3, preferably 3.

Preferred specific examples of the organopolysiloxane serving as component (D) are shown below. 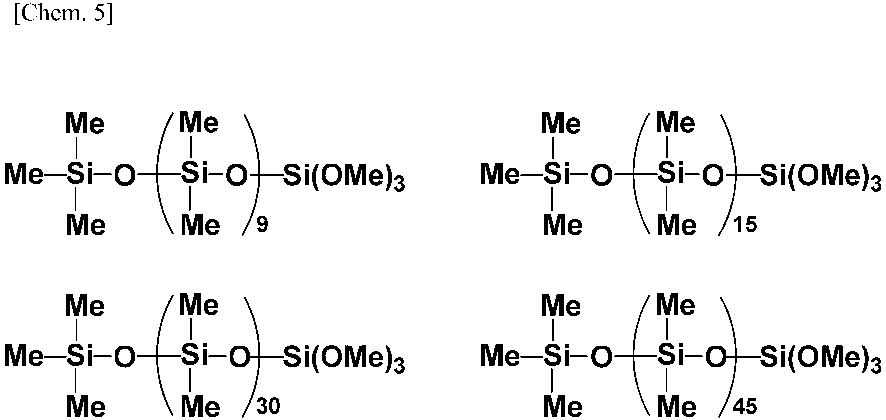 wherein Me stands for methyl (the same holds true, hereinafter).

The viscosity of the organopolysiloxane serving as the component (D) measured with an Ostwald meter at 25°C is typically 0.01 to 1,000 mm²/s, preferably 0.1 to 100 mm²/s. If the viscosity is less than 0.01 mm²/s, there is a likelihood that component (D) bleeds out of the silicone composition, known as oil bleed. When the viscosity is 1,000 mm²/s or less, a two-pack silicone composition having a more suitable viscosity is obtained, and the coating operation is further improved.

When component (D) is used in the present invention, component (D) is preferably used in the form of a heat-treated mixture with component (C) or components (A) to (C) above at a temperature of 70°C or higher. The temperature is more preferably 80°C to 180°C.

When component (D) is used in the present invention, component (C) described above can also be pre-treated with component (D). The treatment of component (C) with component (D) can provide the effect of further reducing the viscosity of the resulting two-pack silicone composition. For the surface treatment of component (C) with component (D) in this case, any of spray mode through a fluid nozzle, agitation mode with shearing force, dry mode on a ball mill, mixer or the like, and wet mode using water or organic solvents may be employed. Agitation is performed to such an extent that the thermally conductive filler does not fracture. In the dry mode, the system temperature or drying temperature after the treatment is determined as appropriate, depending on the type of surface treating agent, in the range at which the surface treating agent will not volatilize or decompose, and typically in the range of, for example, 80°C to 180°C.

In the entire thermally conductive two-pack addition-curable silicone composition obtained by combining the first pack and the second pack, the amount of component (D) is preferably 10 to 500 parts by mass, more preferably 25 to 450 parts by mass, even more preferably 100 to 400 parts by mass, based on a total of 100 parts by mass of components (A) and (B). With the above range, component (D) further exhibits the viscosity-reducing effect on the two-pack silicone composition. In a two-pack addition-curable material, the organohydrogenpolysiloxane undergoes dehydrogenation during storage at room temperature due to the presence of the thermally conductive filler. Therefore, an excessively small amount of component (D) may fail to suppress a decrease in hardness over time during storage at room temperature. Setting the amount of component (D) to be less than or equal to the upper limit described above can further suppress the separation and sedimentation of the thermally conductive filler in the composition over time. The amount of component (D) in the entire thermally conductive two-pack addition-curable silicone composition obtained by combining the first pack and the second pack is preferably 0.9 to 10.0 mass%, more preferably 2.0 to 8.0 mass%.

When component (D) is used, component (D) can be used in both the first pack and the second pack or in one of the first pack and the second pack. The ratio of portions of component (D) in the first pack and the second pack is not particularly limited. For example, equal amounts of component (D) can be used in the first pack and the second pack.

### [Component (E)]

Component (E) of the present invention is a hydrosilylation reaction platinum catalyst, which promotes the addition reaction of alkenyl groups in component (A) with silicon-bonded hydrogen atoms in component (B). Examples of the catalyst include chloroplatinic acid, alcohol-modified chloroplatinic acids, coordination compounds of chloroplatinic acid with olefins, aldehydes, vinylsiloxanes, or acetylene compounds, tetrakis(triphenylphosphine)palladium, and chlorotris(triphenylphosphine)rhodium. Platinum catalysts are preferred, and coordination compounds of chloroplatinic acid with vinylsiloxanes are more preferred.

The amount of component (E) blended may be a catalytic amount and is used in such an amount as to provide 0.1 to 500 ppm (mass), preferably 1 to 100 ppm by mass of platinum group metal based on the entire thermally conductive two-pack addition-curable silicone composition obtained by combining the first pack and the second pack from the perspective of suitable curability. Component (E) is used in the first pack and is not contained in the second pack.

In addition to the foregoing components (A) to (E), the composition of the present invention may contain various per-se known components (additives) other than the above components insofar as the objects of the present invention are not compromised. When additives are contained, the amount of the additives is preferably 1.0 mass% or less, more preferably 0.5 mass% or less, or may be 0 mass% based on the entire thermally conductive two-pack addition-curable silicone composition obtained by combining the first pack and the second pack.

For example, there may be blended reaction control agents for adjusting the cure rate and storage stability, e.g., triallyl isocyanate alkyl maleates, acetylenic alcohols such as ethynyldecylmethylcarbinol and ethynylcyclohexanol, silanes thereof and siloxane modified compounds thereof; hydroperoxide, tetramethylethylenediamine, colorants such as ferrous oxide and ferric oxide alone or in admixture, and thixotropic agents such as fumed silica.

### [Production Method]

The composition of the present invention is a thermally conductive two-pack addition-curable silicone composition composed of the first pack containing components (A), (C), (D), and (E) above and being free of component (B) above and the second pack containing components (A), (B), (C), and (D) above and being free of component (E) above. These can be obtained by mixing the components.

The method for producing the composition of the present invention includes mixing the components of the first pack and the second pack. The preparation of the thermally conductive filler (C) preferably includes a step of mixing (C-1), (C-2), and (C-3). Specifically, the production method including the following steps is exemplified.

The preparation of the first pack includes a step of mixing components (A), (C), and (D), heat-treating the resulting mixture at a temperature of 70°C or higher to obtain a heated mixture, and
a step of cooling the heated mixture obtained above to room temperature (25°C) or lower and then adding component (E), a reaction control agent, a colorant, and a thixotropic agent.

The preparation of the second pack includes
a step of mixing components (A), (C), and (D), heat-treating the resulting mixture at a temperature of 70°C or higher to obtain a heated mixture, and
a step of cooling the heated mixture obtained above to room temperature (25°C) or lower and then adding component (B), a reaction control agent, a colorant, and a thixotropic agent.

The heating temperature in the heat treatment step is preferably 70°C or higher, more preferably 70°C to 180°C. The heating time is preferably, but not necessarily, 1 hour or more, more preferably 1 to 3 hours. When additives are blended, the additives may be blended in any step, but are preferably blended after cooling the heated mixture. The mixer used to prepare the first pack and the second pack may be a static mixer, a planetary mixer, a paddle mixer, or other known mixer.

In the composition of the present invention, the first pack and the second pack are preferably mixed in a substantially equal mass ratio. Specifically, the first pack and the second pack are mixed in a mass ratio of preferably from 1:0.5 to 1:2, more preferably from 1:0.75 to 1:1.25, even more preferably from 1:0.9 to 1:1.1, most preferably from 1:0.95 to 1:1.05. The mixer for mixing the first pack and the second pack is not limited to a static mixer or other stationary mixer, and may be any of well-known mixers such as planetary mixers and puddle mixers.

### [Thermally Conductive Two-Pack Addition-Curable Silicone Composition]

In the thermally conductive two-pack addition-curable silicone composition of the present invention, the viscosity of each of the first pack and the second pack at 25°C is preferably 30 to 800 Pa·s, more preferably 60 to 500 Pa·s, even more preferably 90 to 300 Pa·s. A viscosity greater than or equal to the lower limit described above improves shape retention, and a viscosity less than or equal to the upper limit described above further improves workability. The viscosity can be adjusted mainly by controlling the amount and blending ratio of component (C) within the ranges specified above. The viscosity can be measured with a spiral viscometer, such as a Malcolm viscometer (Type PC-10AA, rotation speed 10 rpm).

The thermal conductivity of the thermally conductive two-pack addition-curable silicone composition of the present invention, the first pack, and the second pack is preferably 3.0 W/m·K or higher, more preferably 3.3 W/m·K or higher, from the viewpoint of heat dissipation performance of heat-generating electronic components. The upper limit of the thermal conductivity may be set to 5.2 W/m·K or less, or 4.2 W/m·K or less. The thermal conductivity can be adjusted mainly by controlling the amount and blending ratio of component (C) within the ranges specified above. The thermal conductivity is measured using the hot disk method in accordance with ISO 22007-2.

The density of the thermally conductive two-pack addition-curable silicone composition of the present invention, the first pack, and the second pack is preferably 2.0 g/cm³ or more, more preferably 2.2 g/cm³ or more. The upper limit of the density is preferably 3.0 g/cm³ or less, more preferably 2.8 g/cm³ or less, from the viewpoint of weight reduction of the material and components made therefrom. The density can be adjusted mainly by controlling the amount and blending ratio of component (C) within the ranges specified above. The density is measured using the immersion method in accordance with JIS K 6268.

### [Cured Product]

The conditions for curing the thermally conductive two-pack addition-curable silicone composition of the present invention are not particularly limited and may be the same as the curing conditions well known for addition-curable silicone compositions. For example, the composition sufficiently cures at normal temperature or may be heated if necessary. In the case of heat curing, the conditions include heating at 40 to 180°C for 1 to 60 minutes.

The hardness of the cured product is preferably 10 to 90, more preferably 20 to 80 as measured with a Shore 00 hardness tester specified in ASTM D 2240-05. A hardness greater than or equal to the lower limit described above makes the heat dissipation material less likely to shift or detach from the mounted position due to vibrations or other impacts. A hardness less than or equal to the upper limit described above can reduce the stress on electronic components and can extend the solder life. The measurement methods and preferred ranges for the thermal conductivity and density of the cured product are the same as those for the thermally conductive two-pack addition-curable silicone composition described above.

### [Sheet]

The shape of the cured product is not particularly limited. The cured product is preferably in sheet form. The physical state of the thermally conductive sheet is not particularly limited; examples include gel, low-hardness rubber-like, and high-hardness rubber-like states. Among these, a low-hardness rubber-like state is preferred. In this case, "low hardness" refers to a hardness of the cured product within the range of 10 to 90. The thickness of the sheet is preferably, but not necessarily, 100 µm or more. In view of the size of electronic components to be mounted, the thickness of the sheet is preferably 5 mm or less.

### EXAMPLES

The present invention is illustrated more fully below by way of Examples and Comparative Examples, although the present invention is not limited by Examples described below. In the following formulas, Me represents a methyl group, Vi represents a vinyl group, and the order of siloxane bonds is not specified.

The raw materials are described below.

The kinematic viscosity of component (A) is a kinematic viscosity at 25°C measured with an Ostwald viscometer.

### Component (A)

- A-1:: Molecular chain both end dimethylvinylsiloxy-capped dimethylpolysiloxane (kinematic viscosity 400 mm²/s, the amount of substance of Vi groups is 0.0185 mol per 100 g, and e in general formula (3) is 146)

### Component (B)

- B-1:: Trimethylsiloxy-capped methylhydrogen-dimethylpolysiloxane represented by formula (5) (Si-H content: 0.00128 mol/g) 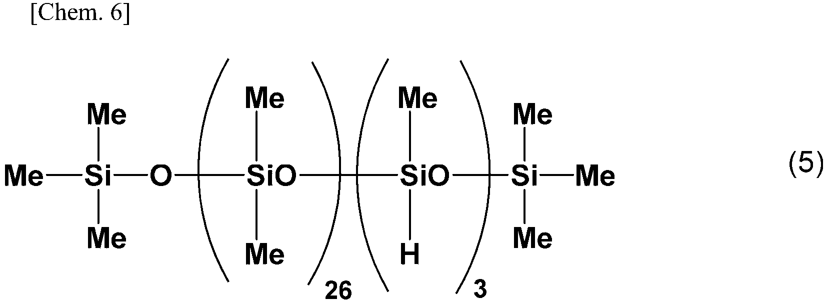
- B-2:: Trimethylsiloxy-capped methylhydrogen-dimethylpolysiloxane represented by formula (6) (Si-H content: 0.00190 mol/g) 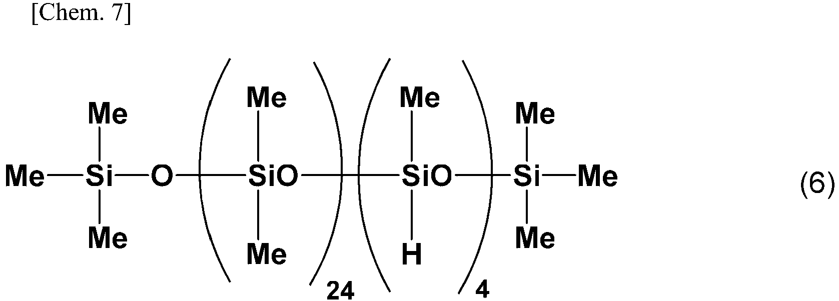
- B-3:: Dimethylhydrogensiloxy-capped dimethylpolysiloxane represented by formula (7) (Si-H content: 0.00130 mol/g)

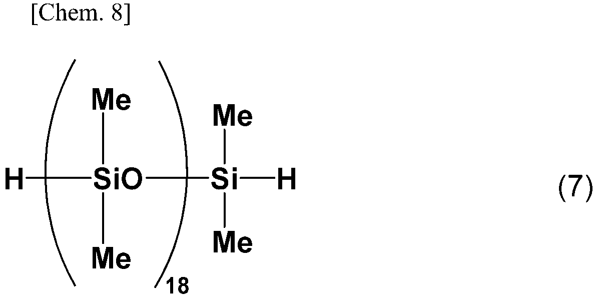

### Component (C)

- C-1-1:: Ground aluminum hydroxide (average particle size 90 µm, density 2.42 g/cm³)
- C-1-2:: Ground aluminum hydroxide (average particle size 53 µm, density 2.42 g/cm³)
- C-2-1:: Ground aluminum hydroxide (average particle size 12 µm, density 2.42 g/cm³)
- C-2-2:: Ground aluminum hydroxide (average particle size 8 µm, density 2.42 g/cm³)
- C-3-1:: Ground aluminum oxide (average particle size 2 µm, density 3.98 g/cm³)

### Component (D)

- D-1:: Organopolysiloxane represented by formula (8)

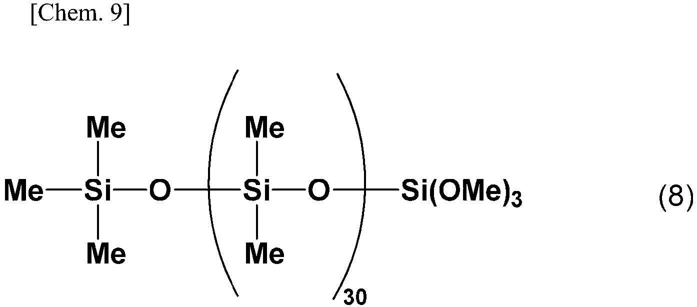

### Component (E)

- E-1:: Chloroplatinic acid vinylsiloxane complex (Pt content: 1 mass%)

### First pack

Component (A), component (C), and component (D) were added to a 5-L planetary mixer (available from Inoue Mfg., Inc.) in the mass mixing ratios shown in Tables 1 to 3 and mixed, and then subjected to heat treatment and mixing at 150°C for 1 hour to obtain a mixture 1.

Next, the mixture 1 was sufficiently cooled to room temperature (25°C), and component (E) was added in the mass mixing ratios shown in Tables 1 to 3 below and uniformly mixed at room temperature (25°C) for 20 minutes to obtain a first pack.

### Second pack

Component (A), component (C), and component (D) were added to a 5-L planetary mixer (available from Inoue Mfg., Inc.) in the mass mixing ratios shown in Tables 1 to 3 below and mixed, and then subjected to heat treatment and mixing at 150°C for 1 hour to obtain a mixture 2.

Next, the mixture 2 was sufficiently cooled to room temperature (25°C), and component (B) was added in the mass mixing ratios shown in Tables 1 to 3 below and uniformly mixed at room temperature (25°C) for 20 minutes to obtain a second pack.

### [Viscosity]

The viscosity of both the first pack and the second pack of each Example was measured at 25°C using a spiral viscometer, Malcolm viscometer (Type PC-10AA, rotation speed 10 rpm).

Using a static mixer, MXA 6.3-21 (available from Noritake Co., Ltd.), the first and second packs of each Example were mixed in a mass ratio of 1:1 and dispensed at normal temperature (25°C) to obtain a uniform mixture. The uniform mixture was then thoroughly degassed under vacuum, cast into a mold so as to provide a cured thickness of 6 mm, and cured at 25°C for 24 hours into a sheet-shaped cured product. The obtained cured product was measured for thermal conductivity at 25°C by a hot disk thermal property measuring instrument TPS 2500S (available from Kyoto Electronics Mfg., Co., Ltd.) (by the hot disk method according to ISO 22007-2).

### [Density]

Using a static mixer, MXA 6.3-21 (available from Noritake Co., Ltd.), the first and second packs of each Example were mixed in a mass ratio of 1:1 and dispensed at normal temperature (25°C) to obtain a uniform mixture. The uniform mixture was then thoroughly degassed under vacuum, cast into a mold so as to provide a cured thickness of 6 mm, and cured at 25°C for 24 hours into a sheet-shaped cured product. The density of the obtained cured product was measured by the immersion method specified in JIS K 6268, and the measured value was employed.

### [Confirmation of Separation and Sedimentation of Thermally Conductive Filler]

The first pack and the second pack of each Example were filled into a 350 mL cylindrical container in an amount of 800 g and left to stand at room temperature for one month. After that, a ruler was immersed in the material. If the ruler contacted the bottom of the container, the result was marked "○;" if the ruler contacted a hard part of the material before reaching the bottom, the result was marked "×."

The results for viscosity, thermal conductivity, density, and confirmation of separation and sedimentation are described in Tables 1 to 3.

**[Table 1]**

| First pack/Second pack | Example 1 | Example 2 | Example 3 | Example 4 | Example 5 |
|---|---|---|---|---|---|
| (A-1) (parts by mass) | 51/39 | 41/30 | 31/22 | 41/30 | 41/30 |
| (B-1) (parts by mass) | -/2.0 | | | | |
| (B-2) (parts by mass) | | -/2.0 | -/1.6 | -/2.0 | -/2.0 |
| (B-3) (parts by mass) | -/10.0 | -/6.6 | -/5.0 | -/6.6 | -/6.6 |
| (C-1-1) (parts by mass) | | | | | 400/400 |
| (C-1-2) (parts by mass) | 420/420 | 400/400 | 400/400 | 450/450 | |
| (C-2-1) (parts by mass) | | | | | |
| (C-2-2) (parts by mass) | 210/210 | 200/200 | 200/200 | 150/150 | 200/200 |
| (C-3-1) (parts by mass) | 630/630 | 600/600 | 600/600 | 600/600 | 600/600 |
| (D-1) (parts by mass) | 60/60 | 70/70 | 80/80 | 70/70 | 70/70 |
| (E-1) (parts by mass) | 0.4/- | 0.4/- | 0.4/- | 0.4/- | 0.4/- |
| Si-H/Si-Vi | 0.93 | 0.94 | 0.97 | 0.94 | 0.94 |
| Component (C) (mass%) in two-pack silicone composition | 91.9 | 91.6 | 91.6 | 91.6 | 91.6 |
| (C-1) mass% in component (C) | 33.3 | 33.3 | 33.3 | 37.5 | 33.3 |
| (C-2) mass% in component (C) | 16.7 | 16.7 | 16.7 | 12.5 | 16.7 |
| (C-1) + (C-2) mass% in component (C) | 50.0 | 50.0 | 50.0 | 50.0 | 50.0 |
| (C-3) mass% in component (C) | 50.0 | 50.0 | 50.0 | 50.0 | 50.0 |
| (C-1) parts by mass based on total 100 parts by mass of components (A), (B), (D), and (E) | 378 | 364 | 364 | 410 | 364 |
| (C-2) parts by mass based on total 100 parts by mass of components (A), (B), (D), and (E) | 189 | 182 | 182 | 137 | 182 |
| (C-3) parts by mass based on total 100 parts by mass of components (A), (B), (D), and (E) | 568 | 546 | 546 | 546 | 546 |
| (D) parts by mass based on total 100 parts by mass of components (A) and (B) | 118 | 176 | 269 | 176 | 176 |
| (E) (ppm) in two-pack silicone composition | 1.46 | 1.53 | 1.53 | 1.53 | 1.53 |
| Viscosity (Pa·s) | 268/239 | 144/135 | 98/96 | 153/144 | 155/133 |
| Thermal conductivity (W/mK) | 3.8 | 3.6 | 3.7 | 3.6 | 3.1 |
| Density (g/cm³) | 2.56 | 2.54 | 2.53 | 2.54 | 2.54 |
| Separation and sedimentation | ○ | ○ | ○ | ○ | ○ |

**[Table 2]**

| First pack/Second pack | Example 6 | Example 7 | Example 8 | Comp. Ex. 1 | Comp. Ex. 2 |
|---|---|---|---|---|---|
| (A-1) (parts by mass) | 41/30 | 20/16 | 41/30 | 51/39 | 51/39 |
| (B-1) (parts by mass) | | | | -/2.0 | -/2.0 |
| (B-2) (parts by mass) | -/2.0 | -/1.0 | -/2.0 | | |
| (B-3) (parts by mass) | -/6.6 | -/3.3 | -/6.6 | -/10.0 | -/10.0 |
| (C-1-1) (parts by mass) | 400/400 | 440/440 | | | |
| (C-1-2) (parts by mass) | 200/200 | 220/220 | 400/400 | | 630/630 |
| (C-2-1) (parts by mass) | | | 200/200 | | |
| (C-2-2) (parts by mass) | 200/200 | 220/220 | | 630/630 | |
| (C-3-1) (parts by mass) | 400/400 | 440/440 | 600/600 | 630/630 | 630/630 |
| (D-1) (parts by mass) | 70/70 | 80/80 | 70/70 | 60/60 | 60/60 |
| (E-1) (parts by mass) | 0.4/- | 0.4/- | 0.4/- | 0.4/- | 0.4/- |
| Si-H/Si-Vi | 0.94 | 0.93 | 0.94 | 0.93 | 0.93 |
| Component (C) (mass%) in two-pack silicone composition | 91.6 | 92.9 | 91.6 | 91.9 | 91.9 |
| (C-1) mass% in component (C) | 50.0 | 50.0 | 33.3 | | 50.0 |
| (C-2) mass% in component (C) | 16.7 | 16.7 | 16.7 | 50.0 | |
| (C-1) + (C-2) mass% in component (C) | 66.7 | 66.7 | 50.0 | 50.0 | 50.0 |
| (C-3) mass% in component (C) | 33.3 | 33.3 | 50.0 | 50.0 | 50.0 |
| (C-1) parts by mass based on total 100 parts by mass of components (A), (B), (D), and (E) | 546 | 659 | 364 | 0 | 568 |
| (C-2) parts by mass based on total 100 parts by mass of components (A), (B), (D), and (E) | 182 | 220 | 182 | 568 | 0 |
| (C-3) parts by mass based on total 100 parts by mass of components (A), (B), (D), and (E) | 364 | 439 | 546 | 568 | 568 |
| (D) parts by mass based on total 100 parts by mass of components (A) and (B) | 176 | 397 | 176 | 118 | 118 |
| (E) (ppm) in two-pack silicone composition | 1.53 | 1.41 | 1.53 | 1.46 | 1.46 |
| Viscosity (Pa·s) | 151/138 | 151/140 | 159/150 | Not measurable | Not measurable |
| Thermal conductivity (W/mK) | 3.6 | 3.6 | 3.5 | 2.8 | 4.0 |
| Density (g/cm³) | 2.40 | 2.42 | 2.51 | 2.54 | 2.56 |
| Separation and sedimentation | ○ | ○ | ○ | - | - |

**[Table 3]**

| First pack/Second pack | Comp. Example 3 | Comp. Example 4 | Comp. Example 5 |
|---|---|---|---|
| (A-1) (parts by mass) | 51/39 | 51/39 | 51/39 |
| (B-1) (parts by mass) | -/2.0 | -/2.0 | -/2.0 |
| (B-2) (parts by mass) | | | |
| (B-3) (parts by mass) | -/10.0 | -/10.0 | -/10.0 |
| (C-1-1) (parts by mass) | | | |
| (C-1-2) (parts by mass) | 630/630 | 672/672 | 168/168 |
| (C-2-1) (parts by mass) | | | |
| (C-2-2) (parts by mass) | 630/630 | 336/336 | 84/84 |
| (C-3-1) (parts by mass) | - | 252/252 | 1,008/1,008 |
| (D-1) (parts by mass) | 60/60 | 60/60 | 60/60 |
| (E-1) (parts by mass) | 0.4/- | 0.4/- | 0.4/- |
| Si-H/Si-Vi | 0.93 | 0.93 | 0.93 |
| Component (C) (mass%) in two-pack silicone composition | 91.9 | 91.9 | 91.9 |
| (C-1) mass% in component (C) | | 53.3 | 13.3 |
| (C-2) mass% in component (C) | 50.0 | 26.7 | 6.7 |
| (C-1) + (C-2) mass% in component (C) | 50.0 | 80.0 | 20.0 |
| (C-3) mass% in component (C) | 50.0 | 20.0 | 80.0 |
| (C-1) parts by mass based on total 100 parts by mass of components (A), (B), (D), and (E) | 568 | 605 | 151 |
| (C-2) parts by mass based on total 100 parts by mass of components (A), (B), (D), and (E) | 568 | 303 | 76 |
| (C-3) parts by mass based on total 100 parts by mass of components (A), (B), (D), and (E) | 0 | 227 | 908 |
| (D) parts by mass based on total 100 parts by mass of components (A) and (B) | 118 | 118 | 118 |
| (E) (ppm) in two-pack silicone composition | 1.46 | 1.46 | 1.46 |
| Viscosity (Pa·s) | Not measurable | 350/340 | 321/307 |
| Thermal conductivity (W/mK) | 2.2 | 2.4 | 3.2 |
| Density (g/cm³) | 2.13 | 2.30 | 2.92 |
| Separation and sedimentation | - | × | × |

Based on the above results, the thermally conductive two-pack addition-curable silicone compositions of Examples 1 to 8 of the present invention exhibited a thermal conductivity of 3.0 W/m·K or higher, and the separation and sedimentation of the thermally conductive filler in the composition over time was suppressed. Furthermore, the density was 3.0 g/cm³ or less. The thermally conductive silicone composition that exhibited high thermal conductivity, low density, good workability, and high storage stability, and the cured product thereof were obtained. Comparative Examples 1 to 3 indicated that, when any one of components (C-1), (C-2), or (C-3) was absent and the thermally conductive filler was blended in the same proportion, the viscosity was too high to measure. Comparative Examples 4 and 5 indicated that, when the total amount of components (C-1) and (C-2) blended in component (C) and the amount of component (C-3) blended did not fall within the specified ranges, separation and sedimentation over time became more significant, and caking was observed after standing for one month.

### INDUSTRIAL APPLICABILITY

The thermally conductive two-pack addition-curable silicone composition of the present invention has good thermal conduction, is easy to handle, has an appropriate viscosity, and also exhibits low wear. Therefore, this composition can be used for heat dissipation and protection of electronic components, such as power devices, transistors, thyristors, central processing units (CPUs), and graphics processing units (GPUs), and is also expected to reduce wear on coating equipment.

## Claims

1. A thermally conductive two-pack addition-curable silicone composition comprising a first pack and a second pack, the first pack containing components (A), (C), (D), and (E) below and being free of component (B) below, the second pack containing components (A), (B), (C), and (D) below and being free of component (E) below:
(A) an organopolysiloxane having at least two silicon-bonded alkenyl groups per molecule;
(B) an organohydrogenpolysiloxane having at least two silicon-bonded hydrogen atoms per molecule;
(C) a thermally conductive filler containing an aluminum hydroxide powder (C-1) with an average particle size of 40 to 100 µm,
an aluminum hydroxide powder (C-2) with an average particle size of 5 µm or more and less than 40 µm, and
a thermally conductive filler (C-3) with an average particle size of 0.1 µm or more and less than 5 µm, wherein a total proportion of (C-1) and (C-2) in component (C) is 40 to 70 mass%, a proportion of (C-3) in component (C) is 30 to 60 mass%, and a total proportion of component (C) in the entire thermally conductive two-pack addition-curable silicone composition obtained by combining the first pack and the second pack is 90 to 95 mass%;
(D) at least one selected from silane coupling agents and organopolysiloxanes represented by general formula (1) below: 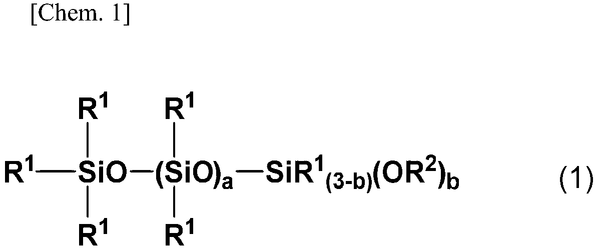 wherein R¹ is independently a monovalent hydrocarbon group, R² is independently an alkyl, alkoxyalkyl, alkenyl or acyl group, a is 5 to 100, and b is 1 to 3; and
(E) a hydrosilylation reaction platinum catalyst.

2. The thermally conductive two-pack addition-curable silicone composition according to claim 1, wherein an amount of component (D) is 10 to 500 parts by mass based on a total of 100 parts by mass of components (A) and (B) in the entire thermally conductive two-pack addition-curable silicone composition obtained by combining the first pack and the second pack.

3. The thermally conductive two-pack addition-curable silicone composition according to claim 1, wherein component (C-3) is aluminum oxide.

4. The thermally conductive two-pack addition-curable silicone composition according to claim 1, wherein a mass ratio of component (C-1) to component (C-2) is 2:8 to 8:2.

5. The thermally conductive two-pack addition-curable silicone composition according to claim 1, wherein an amount of component (C-1), an amount of component (C-2), and an amount of component (C-3) are 100 to 700 parts by mass, 50 to 500 parts by mass, and 150 to 800 parts by mass, respectively, based on a total of 100 parts by mass of components (A), (B), (D), and (E) in the entire thermally conductive two-pack addition-curable silicone composition obtained by combining the first pack and the second pack.

6. The thermally conductive two-pack addition-curable silicone composition according to claim 1 comprising a density of 3.0 g/cm³ or less in an immersion method specified in JIS K 6268 and a thermal conductivity of 3.0 W/m·K or more in a hot disk method in accordance with ISO 22007-2.

7. A cured product of the thermally conductive two-pack addition-curable silicone composition according to any one of claims 1 to 6.

8. A thermally conductive sheet comprising a cured product of the thermally conductive two-pack addition-curable silicone composition according to any one of claims 1 to 6.

9. A method for producing the thermally conductive two-pack addition-curable silicone composition according to any one of claims 1 to 6, comprising a step of mixing components (C-1), (C-2), and (C-3) above.
